# EUROPEAN PATENT SPECIFICATION

(11) **EP 3 889 865 B1**
(45) Date of publication and mention of the grant of the patent: **23.10.2024**
(21) Application number: 19903377.0
(22) Date of filing: 02.12.2019
(51) Int. Cl.: G06Q 20/32, G06F 21/44, G06Q 20/20, G06Q 20/34, G06Q 20/38, G06Q 20/40, H04W 12/122

(54) **METHOD FOR HANDLING RELAY ATTACK AND SECURE ELEMENT**
VERFAHREN ZUR BEHANDLUNG VON RELAISANGRIFF UND GESICHERTES ELEMENT
PROCÉDÉ PERMETTANT DE GÉRER UNE ATTAQUE DE RELAIS ET ÉLÉMENT SÉCURISÉ

(30) Priority: 29.12.2018 CN 201811639972
(43) Date of publication of application: 06.10.2021
(73) Proprietor: Huawei Technologies Co., Ltd., Shenzhen Guangdong 518129 (CN)
(72) Inventor: ZHAO, Xiaona, Shenzhen, Guangdong 518129 (CN)
(74) Representative: Isarpatent
(86) International application number: PCT/CN2019/122310
(87) International publication number: WO 2020/134876

(56) References cited:
- WO-A1-2013/053430
- WO-A1-2018/169522
- WO-A1-2018/169522
- DE-A1- 102011 115 860
- US-A1- 2015 082 427

## Description

### TECHNICAL FIELD

This application relates to the secure payment field, and in particular, to a relay attack processing method and a secure element.

### BACKGROUND

Currently, mobile payment standards such as an EMV standard (including foreign standards such as Europay, Mastercard, and Visa) and a PBOC (the People's Bank of China, the People's Bank of China) standard are widely used in the near field communication (NFC, Near Field Communication) mobile payment field. In recent years, with development of NFC technologies, an NFC function has become a standard configuration for a mid-range and high-end mobile phone. A secure element (SE, secure element) (a physical carrier of the secure element is, for example, a universal integrated circuit card (Universal Integrated Circuit Card, UICC), a secure digital card (Secure Digital Memory Card, SD), or an embedded secure element (eSE, embedded SE)) are gradually mature and can provide a secure storage and running environment for card emulation applications (such as a bank card, a bus card, an access control card, and a car key) in the mobile phone. On more mobile phones, an electronic wallet can be installed to support the NFC payment function, for example, electronic wallets developed by mobile phone manufacturers such as Huawei Pay, and Apple Pay, electronic wallets launched by major banking institutions such as UnionPay Wallet, and electronic wallets launched by some third-party payment service providers. In addition, there is a tendency to gradually support functions such as the car key and access control. An attacker is more likely to perform a relay attack on various card applications by using an NFC mobile phone.

Although NFC has a short communication distance and can reduce such attack as eavesdropping to some extent, the mobile phone has NFC and secure element SE capabilities, and the attacker can easily implement a card reader and a card simulation application. Consequently, the relay attack (relay attack) occurs without being perceived by a user. For example, the attacker implements one card reader based on a card of an attacked user, and simulates a card from an authorized card reader (for example, a point of sale terminal (Point Of Sale, POS) machine in a shopping mall). To be specific, the attacker can read data from the card of the attacked user, transmit, by using a wireless communications technology, the data to a mobile phone that simulates the card, and then transmit the data to an authorized POS machine, to perform spoofing on both sides to complete the relay attack. This is equivalent to indirectly "extending" the NFC communication distance. As a result, unauthorized card swiping occurs in a form of a relay attack, causing a financial loss to a card holder or a merchant.

DE 10 2011 115 860 A1 discloses a mobile communication terminal for exchanging data with a second communication terminal which is physically distanced from the first communication terminal, via a first communication network. The communication terminal has a first communication module for the data exchange with the second communication terminal via the first communication network; a second communication module for the data exchange with a portable data carrier via a second communication network; and a central control unit for controlling a data exchange between the first communication module and the second communication module. The central control unit has a blocking unit, said blocking unit blocking the data exchange via the first communication network as soon as the central control unit registers a data exchange via the second communication network.

WO 2018/169522 A1 discloses a method preventing relay attacks between first and second devices.

### SUMMARY

This application provides a relay attack processing method and a secure element, as defined in the appended set of claims, to detect whether a relay attack is likely to occur or is occurring, and perform defense processing in time when the relay attack is likely to occur or is occurring. This avoids a loss to a user.

According to the invention, if the SE determines that the first card application is selected, the secure element SE monitors the data transfer-out behavior and the data transfer-in behavior of the first card application. If the data transfer-out behavior and the data transfer-in behavior of the first card application meet the relay attack condition, the SE performs defense processing. When internal processing logic of a card application or a card reader (such as a POS machine) does not need to be modified, an identity verification operation does not need to be additionally performed on a user, or a dedicated interference device (such as a tin-paper shell or a tin-paper cover) does not need to be purchased, the SE can detect and defend against the relay attack through function extension. The implementation is relatively simple, imposes no impact on an application developer and a card reader vendor, and does not affect user experience and does not increase user costs.

According to the invention, the relay attack condition includes: The first card application receives a first message through a first logical channel, and sends the first message through a second logical channel, is a specific description about the relay attack condition, and correspondingly is also a description about transfer-in data and transfer-out data of the first card application. This increases feasibility of the solution.

According to an embodiment, the relay attack condition further includes: Before sending the first message through the second logical channel, the first card application receives a second message through the second logical channel, is a specific description about the relay attack condition, and correspondingly is also a description about the transfer-in data and the transfer-out data of the first card application. This increases the feasibility and accuracy of the solution.

According to an embodiment, the relay attack condition further includes: Before sending the first message through the second logical channel, the first card application receives a second message through the second logical channel and sends the second message through the first logical channel, is a specific description about the relay attack condition, and correspondingly is also a description about the transfer-in data and the transfer-out data of the first card application. This increases the feasibility and accuracy of the solution.

According to an embodiment, the first message may include a get processing option GPO response, and the second message may include a GPO command; or the first message may include a read read response, and the second message may include a read command, is a specific description about the first message and the second message. The first message is the GPO response, and the second message is the GPO command; or the first message is the read response, and the second message is the read command. This provides a specific example for the technical solution of this application.

According to an embodiment, the first logical channel is a logical channel between the SE and an application processor, and the second logical channel is a logical channel between the SE and a point of sale terminal, is a specific description about the logical channel.

The SE may monitor the transfer-out data and the transfer-in data of the first card application by recording the message types, the logical channel numbers, and the behavior types, so that the SE better determines whether the relay attack will occur or is occurring.

The preset message may include the GPO response, the GPO command, the read response, or the read command. This provides a specific example for the technical solution of this application.

In this application, several implementations in which the secure element SE determines that the first card application is selected are provided, and several flexible manners are provided to resolve the technical problem. This improves specific implementation of the solution.

The preset application may be an application such as a payment application or an access control application. When the first card application is the preset application, the SE may monitor the data transfer-in behavior and the data transfer-out behavior of the first card application.

If it is determined that the relay attack will occur or is occurring, the SE may select not to send the data to the point-of-sale terminal, or send the empty data to the point-of-sale terminal, to suspend a transaction and avoid a loss to the user.

If it is determined that the relay attack will occur or is occurring, the SE may lock the first card application or lock the SE, to avoid a loss of confidential information of the user or a property loss.

### BRIEF DESCRIPTION OF DRAWINGS

To describe the technical solutions in embodiments of this application more clearly, the following briefly describes the accompanying drawings used in describing the prior art or the embodiments. The accompanying drawings in the following description show merely some embodiments of this application, and other drawings may still be derived from these accompanying drawings.
FIG. 1A is a schematic diagram of a PayWave protocol of Visa;
FIG. 1B is a schematic diagram of a qPBOC protocol of a central bank;
FIG. 1C is a schematic diagram of a PaySaft solution after a PayWave protocol of Visa is improved;
FIG. 2 is an architectural diagram of a system to which an embodiment of this application is applied;
FIG. 3 is a schematic diagram of an embodiment of a relay attack processing method according to an embodiment of this application;
FIG. 4A and FIG. 4B are a schematic diagram of an embodiment of a relay attack processing method according to an embodiment of this application;
FIG. 5A and FIG. 5B are a schematic diagram of another embodiment of a relay attack processing method according to an embodiment of this application;
FIG. 6 is a schematic diagram of an embodiment of a terminal device to which a secure element SE is applied according to an embodiment of this application;
FIG. 7 is a schematic diagram of an embodiment of a secure element SE according to an embodiment of this application; and
FIG. 8 is a schematic diagram of an embodiment of a secure element SE according to an embodiment of this application.

### DESCRIPTION OF EMBODIMENTS

Embodiments of this application provide a relay attack processing method and a secure element, to detect whether a relay attack is likely to occur or is occurring, and perform defense processing in time when the relay attack is likely to occur or is occurring. This avoids a loss to a user.

To make persons skilled in the art understand the technical solutions in this application better, the following describes the technical solutions in the embodiments of this application with reference to the accompanying drawings in the embodiments of this application. Apparently, the described embodiments are merely a part rather than all of the embodiments of this application. All the embodiments that are based on this application shall fall within the protection scope of this application.

The following first briefly describes terms used in the embodiments of this application, as shown in the following.

### (1) Near field communication (NFC, near field communication)

Near field communication is a short-range wireless connection technology based on radio frequency identification (radio frequency identification, RFID), and implements short-distance communication between electronic devices by using magnetic field induction. A user can securely and quickly exchange information and perform a transaction, for example, near-field communication payment, by touching or approaching a device. The NFC works at a frequency of 13.56 MHz. An applicable communication range of the NFC is 0 to 20 cm, and a typical value is 4 cm.

### (2) Three working modes of an NFC device (namely, roles that the NFC device plays in NFC communication)

a. Peer-to-peer (P2P, Peer-to-Peer), used in scenarios such as contact card sharing, web page sharing, or NFC and Bluetooth/wireless fidelity (wireless fidelity, Wi-Fi) pairing
b. Card emulation (CE, card emulation), used in mobile payment or identity authentication scenarios such as a bank card, a transportation card, a membership card, a coupon, and an identification card
c. Reader/Writer (R/W, reader/writer), used in mobile payment or identity verification scenarios such as a point of sale (POS, point of sale) terminal of a bank card, and a POS machine on a bus, as well as a tag reader/writer scenario.

### (3) NFC controller (NFCC, NFC controller)

An NFC controller is responsible for physical transmission of data through a radio frequency (radio frequency, RF) interface and an antenna. In an NFC device having a function, the NFCC generally corresponds to an NFC chip.

### (4) Secure element (SE, secure element)

A secure element is an anti-tamper component and provides security, confidentiality, and a multi-application running environment for various services (such as a bank card, a bus card, and access control). Possible physical carrier forms include a universal integrated circuit card (UICC, universal integrated circuit card), an intelligent secure digital card (SD card, secure digital card), an intelligent micro-SD card, an embedded SE (eSE, embedded SE), and the like; and
comply with a card specification (card specification) formulated by a global platform (GP, global platform).

### (5) Global platform GP environment (OPEN, global platform environment)

A global platform environment is a central administrator of a card that owns a GP registry (global platform registry), and is responsible for providing an interface (application programming interface, API) for an application, distributing a command, selecting an application, managing a logical channel (optional), managing card content, and the like.

### (6) Logical channel (LC, logical channel)

A logical channel is a logical interface for exchanging data between a card and an external entity, and includes a basic logical channel (BLC, basic LC) and a supplementary logical channel (SLC, supplementary LC). The basic logical channel is a permanently available interface, and its number is 0. The supplementary logical channel is an additional interface, and can be created in real time as required. Currently, a GP card specification supports numbers 1 to 19.

### (7) Contactless interface (contactless interface)

A contactless interface is a contactless physical interface between a card and an external entity. For example, an ISO/IEC 14443 protocol is supported.

### (8) Contact interface (contact interface)

A contact interface is a contact physical interface between a card and an external entity. For example, an ISO/IEC 7816 protocol is supported.

### (9) Rich execution environment (REE, rich execution environment)

A rich execution environment is an open environment created for multi-function and richness, runs a mobile terminal operating system (such as Android OS and iOS), and provides a download service for a third party after device production.

### (10) Client application (CA, client application)

A client application is a common application running in an REE.

### (11) Trusted execution environment (TEE, trusted execution environment)

A trusted execution environment is a concept proposed by a global platform (global platform, GP) for an open environment (REE, Rich Execution Environment) of a smart mobile terminal, and is a running environment that coexists with but is isolated from the REE. A trusted OS runs in the trusted execution environment and can provide a security service for a rich OS by using a combination of hardware and software, to ensure secure transmission, storing, and processing of sensitive data, confidentiality and integrity of TA execution, and end-to-end security of a data access permission. Because the trusted execution environment has own execution space, a security level of the trusted execution environment is higher than that of the rich OS, but lower than that of a secure element SE.

### (12) Trusted application (TA, trusted application)

A series of trusted applications TAs run in a TEE. Different from a common application in an REE, the TEE can provide a security service for these TAs, such as integrity of application execution, secure storage, secure interaction between an input device and an output device, key management, an encryption algorithm, security communication with a client application CA in the REE.

A TA is an application that runs in the TEE and can provide a security-related service for CA(s) in the REE or other TA(s) in the TEE. The CAruns in the REE and can invoke or gain access to applications in TA(s) in the TEE through a TEE client API (that is, an interface for the REE to gain access to the TEE).

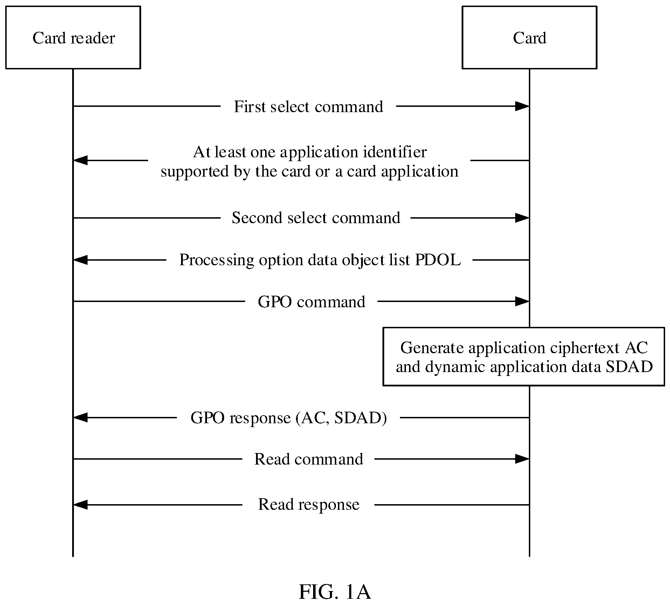

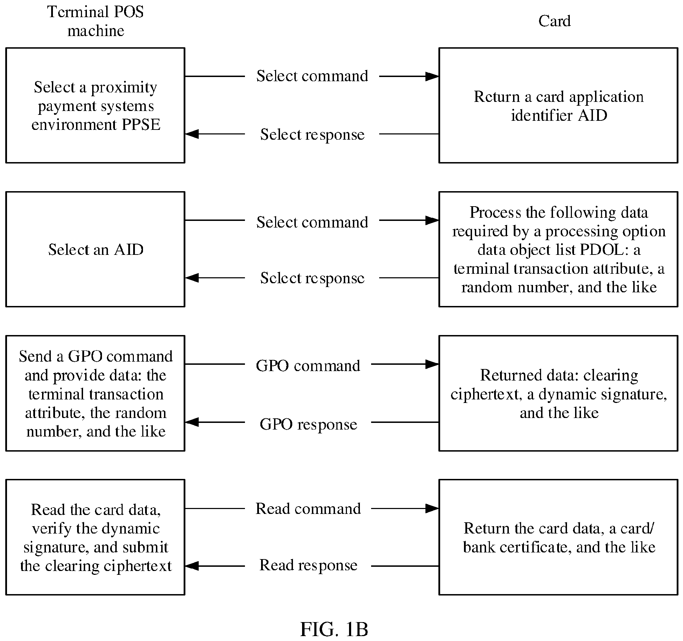

FIG. 1A shows a PayWave protocol of Visa. FIG. 1B shows a qPBOC protocol of a central bank. As shown in FIG. 1A and FIG. 1B, a first select command is used to obtain, from a card, at least one application identifier (AID, Application Identifier) supported by the card. A second select command is used to select one card application on the card, so that a POS machine can use the card application to complete a transaction (such as payment). A get processing option (get processing options, GPO) command is used to request key information, such as a signature and ciphertext, necessary for the transaction from the card. A read (Read) command is used to request, from the card, data required for verifying the signature, such as a card public key certificate and a random number. The signature is signed dynamic application data (signed dynamic application data, SDAD) used for card verification. The ciphertext is application cryptogram (application cryptogram, AC) used for payment and settlement. In a process of exchanging data between the card and the POS defined in the PayWave protocol and the qPBOC protocol, for details about data that is specifically exchanged by using the GPO command and a response, and the read command and a response, how the card generates the signature and the ciphertext, and how a terminal verifies the signature and how to verify the ciphertext, refer to a corresponding standard protocol. Details are not described herein.

For a relay attack that may exist in the foregoing NFC mobile payment scenarios, there are several technical solutions, but each solution still has some problems, which are specifically as follows.

In one implementation, an active confirmation/authorization operation of a user is added at an application layer to resolve the relay attack, for example, a means sensed by the user, for example, the user is required to enter a password on a POS machine when a physical card is used for payment on the merchant POS machine, or the user is required to verify fingerprint when the user uses a mobile phone to make a payment on a POS machine.

However, in many contactless payment solutions, to make it more convenient for a user to use a credit card, especially for entity credit cards in foreign regions such as Europe and the United States, and many entity cards in China, there is a small-amount password-free function, and the user is not required or forced to perform the active confirmation/authorization operation. In a mobile phone card emulation case, it has been stated in a paper that even if a personal identification number (personal identification number, PIN) of an SIM card is set in a mobile wallet, it may be bypassed. This is because the PIN code is usually verified at a mobile wallet layer. After the PIN code is verified, an SE can be accessed. If malware is installed on a mobile phone system to initiate the relay attack, the malware can also bypass the PIN verification and directly gain access to the SE.

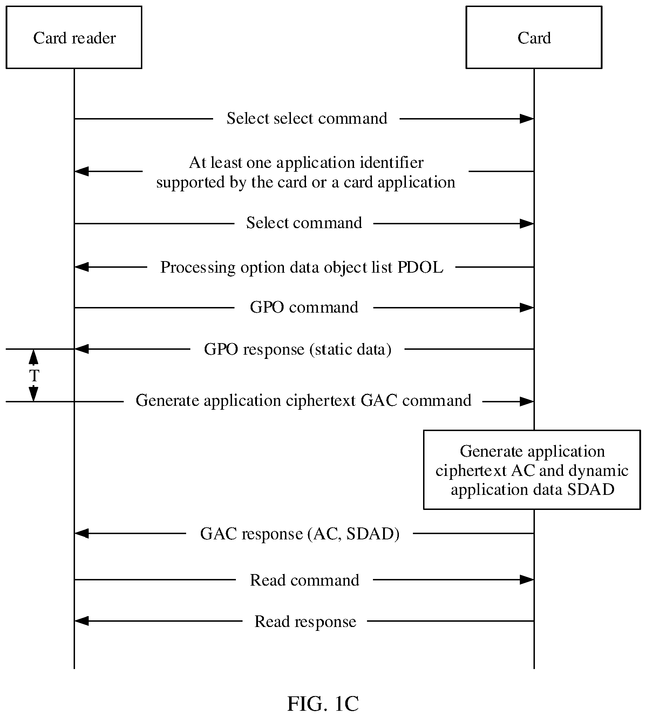

In another implementation, a POS machine determines whether interaction times out, to detect whether the relay attack exists. FIG. 1C is a schematic diagram of a PaySaft solution after a PayWave protocol of Visa is improved. In other words, an original GPO command response pair is split into two command response pairs. A first command response pair is used to exchange only static data (for example, a random number generated by a card reader or a random number generated by a card) by using a GPO command response pair, and a second command response pair is used to exchange a dynamic signature SDAD and ciphertext AC by using a generate application ciphertext (GAC, Generate AC) command response pair. Because a card side in a first pair of message interaction basically does not involve an operation, a POS side determines whether a timeout occurs in the first pair of message interaction, that is, whether a time interval between a GPO response and a GPO command exceeds a time threshold T, to determine whether the relay attack exists.

However, there are many types of cards, and different cards have different delays. It is difficult to set a unified time threshold to prevent all relay attacks. Otherwise, a normal transaction may be incorrectly determined as the relay attack. This affects normal use of a user.

In another implementation, one solution is that a POS machine detects, by using distance location information, whether the relay attack exists. For example, a legal card application adds global positioning system (global positioning system, GPS) location information about the legal card application to upper-layer data and sends the data to a peer end, so that after the peer end relays the data to the legal POS machine, the legal POS machine checks the GPS location information to determine whether two parties approach each other.

However, there are the following disadvantages: 1. The card application side needs to add and pack the GPS real-time location information to the upper-layer data. This is applicable only to mobile phone card emulation and is not applicable to a physical card. Judgment logic also needs to be added to the POS machine. 2. If the GPS information is used as input of an SDAD, an attacker can theoretically obtain a generate SDAD and an original text. Then, the attacker can replace the GPS information and generate a new SDAD for the legal POS to verify a signature. There is still a possibility of the relay attack. 3. GPS positioning accuracy of a mobile phone is about several meters, especially, poor in indoor positioning accuracy. As a result, the relay attack in an environment such as a shopping mall or a supermarket may not be effectively detected and defended.

In another implementation, a user needs to specially purchase NFC communication shielding/interference device (such as a tin-paper shell/set). When using the device, the user removes the NFC communication shielding/interference device, and installs the device when the device is not used. It is clearly that additional purchase of the shielding/interference device not only increases costs, but also affects user experience.

It may be understood that the relay attack exists not only in the NFC mobile payment scenario, but also in other scenarios such as an access control scenario and a car key scenario. The relay attack can bypass a security protocol at an application layer (for example, two-way authentication through password negotiation). It is difficult to resolve the problem at the application layer.

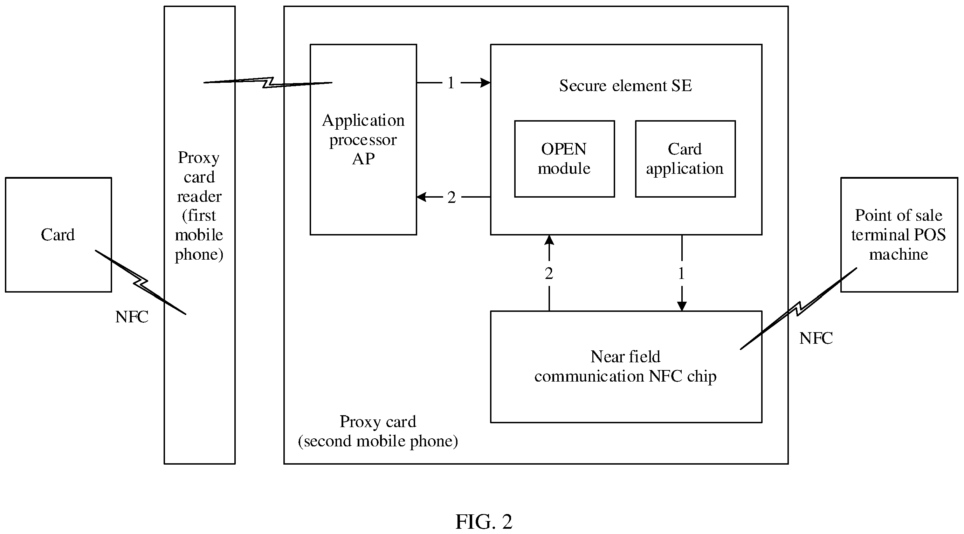

FIG. 2 is an architectural diagram of a system used to detect and process a relay attack according to an embodiment of this application. The system architecture may include a card, a proxy card reader, a proxy card, and a point of sale terminal (such as a POS machine). The proxy card reader and the proxy card are devices used by an attacker to perform the relay attack, and may be terminal devices, such as a mobile phone, a smartphone, a portable terminal, a personal digital assistant (personal digital assistant, PDA), a portable multimedia player (personal media player, PMP) apparatus, a notebook computer, a notebook (note pad), a wireless broadband (wireless broadband, Wibro) terminal, a tablet computer (personal computer, PC), a smart PC, or a wearable device (wearable device).

In the following embodiments, the proxy card reader and the proxy card may be described by using a mobile phone as an example. The proxy card reader implements a card reader function by using the mobile phone, and the proxy card simulates a mobile phone as a card, which may include but is not limited to an application processor (application processor, AP), an SE, and an NFC chip. The SE may also include an OPEN module and a card application (card application).

A solution idea of this embodiment of this application is as follows: When detecting that a first card application is selected by a peer POS machine (for example, selected on a logical channel (basic logical channel, basic LC) corresponding to a contactless interface) and also is selected on another logical channel LC (For example, on a logical channel supplementary LC corresponding to a contact interface), the SE detects whether a relay attack condition is meet. The relay attack condition is, for example, that the first card application intends to send data received from a first LC out through a second LC. If the relay attack condition is met, the SE takes a defense measure. For example, the SE does not send the data out, sends an empty data packet out, or interferes with the to-be-interacted data (for example, no response or a response error) in subsequent interaction.

It should be noted that the OPEN module is a management module that is responsible for operations such as command distribution, card content management, security management, and internal communication in a card standard defined by a GP. The OPEN module may be extended in this application, or a separate module may be added to implement the technical solution of this application. To be specific, the OPEN module with an extended function may independently perform functions corresponding to this embodiment of this application, or another separate added module (for example, integrated into the SE or a terminal) may be used to perform functions corresponding to this embodiment of this application.

In this embodiment of this application, if the first card application is selected, the secure element SE records data transfer-out behavior and data transfer-in behavior of the first card application. If the recorded data transfer-out behavior and data transfer-in behavior of the first card application meet the relay attack condition, the SE performs defense processing. For example, the SE does not send out data that the first card application is ready to respond to the POS machine, sends an empty data packet (for example, removing service data carried in a payload payload of a response message ready to be responded to the POS machine) out, or interferes with the to-be-interacted data in the subsequent interaction (for example, no response, or the response error).

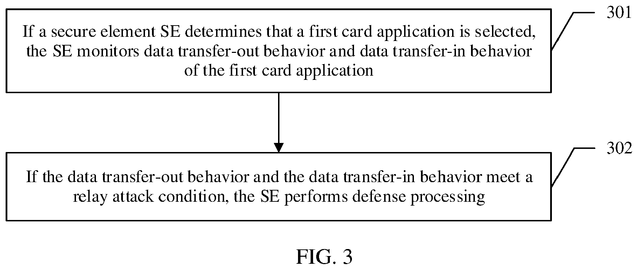

The following further describes the technical solutions of this application by using embodiments. FIG. 3 is a schematic diagram of an embodiment of a relay attack processing method according to an embodiment of this application. The method may include the following steps.

301: If a secure element SE determines that a first card application is selected, the SE monitors data transfer-out behavior and data transfer-in behavior of the first card application.

That the SE determines that the first card application is selected may include but is not limited to the following several implementations.

Manner 1: The SE obtains a first select command through a first logical channel; and if the first select command includes a first card application identifier (application identifier, AID), the SE determines that the first card application is selected. For example, if the SE receives a first select command sent by a mobile phone 2, and the first select command may include information about the first logical channel and information about the first card application identifier, the SE determines that the first card application is selected.

Manner 2: The SE obtains a first select command through a first logical channel, and obtains a second select command through a second logical channel; and if the first select command includes a first card application identifier and the second select command includes the first card application identifier, the SE determines that the first card application is selected. For example, if the SE receives a first select command sent by a mobile phone 2, the first select command may include information about the first logical channel and information about the first card application identifier, the SE receives a second select command sent by a POS machine, and the second select command may include information about the second logical channel and the information about the first card application identifier, the SE determines that the first card application is selected.

Further, if the SE determines that the first card application is selected, and the SE determines the first card application as a preset application, the secure element SE monitors the data transfer-out behavior and data transfer-in behavior of the first card application. The first card application is a card application stored in the SE.

It may be understood that the preset application is a payment application, an access control application, or the like. The first card application may be selected by using a select (select) command. For example, the first card application may be selected by a remote POS machine. In this case, the select command is sent through a contactless interface (refer to NFC or an ISO 14443 protocol, it describes how a logical channel LC is created and opened). Alternatively, the first card application may be selected by an internal AP of a terminal. In this case, the select command is sent through a contact interface (that corresponds to the ISO 7816 1-2 physical layer protocol and on which another logical channel LC is created and opened). Alternatively, the first card application may be selected in another manner. This is not specifically limited herein.

That the SE monitors at least one of the data transfer-out behavior and the data transfer-in behavior of the first card application may include: The SE parses a message header of at least one of transfer-out data and transfer-in data of the first card application to obtain a corresponding message type and logic channel number. When the message type is a preset message type, the SE records at least the logic channel number and a behavior type of the at least one of the transfer-out data and the transfer-in data of the first card application. The behavior type is transfer-in behavior or transfer-out behavior.

It should be noted that the SE may alternatively directly determine, based on a condition of determining the first card application as the preset application, to monitor the data transfer-out behavior and the data transfer-in behavior of the first card application.

In this embodiment of this application, the data transfer-in behavior of the first card application may be understood as that the first card application receives data (for example, a select command, a GPO command, or a read command) or an external device (for example, the POS machine or the AP of the terminal) sends data to the first card application, and more specifically, may be that the SE or an OPEN in the SE is used to transfer data to the first card application. The data transfer-out behavior of the first card application may be understood as that the first card application needs to send data to an external device (for example, a response to a command that needs to be answered), and more specifically, may be that the SE or an OPEN in the SE is used to send data to the external device.

302: If the data transfer-out behavior and the data transfer-in behavior meet a relay attack condition, the SE performs defense processing.

The relay attack condition may include but is not limited to the following manners.

Manner 1: The first card application receives a first message through a first logical channel, and the first card application sends the first message through a second logical channel.

Manner 2: The first card application receives a first message through a first logical channel, and the first card application sends the first message through a second logical channel. Before sending the first message through the second logical channel, the first card application receives a second message through the second logical channel.

In an implementation, the first card application receives the first message through the first logical channel, receives the second message through the second logical channel, and then sends the first message through the second logical channel. An execution sequence of receiving the first message by the first card application through the first logical channel and receiving the second message through the second logical channel is not limited.

Manner 3: The first card application receives a first message through a first logical channel, and the first card application sends the first message through a second logical channel. Before the first card application sends the first message through the second logical channel, the first card application receives a second message through the second logical channel, and sends the second message through the first logical channel.

In an implementation, the first card application receives the second message through the second logical channel, sends the second message through the first logical channel, then receives the first message through the first logical channel, and finally sends the first message through the second logical channel.

Optionally, the first message includes a get processing option GPO response, and the second message includes a GPO command. Alternatively, the first message includes a read read response, and the second message includes a read command. The first logical channel is a logical channel between the SE and an application processor, and the second logical channel is a logical channel between the SE and a point of sale terminal.

Further, that the secure element performs defense processing may include: The secure element does not send data to the point of sale terminal, or the secure element sends empty data to the point of sale terminal.

Optionally, the secure element may lock the first card application, or lock the secure element.

In this embodiment of this application, if the SE determines that the first card application is selected, the secure element SE monitors the data transfer-out behavior and the data transfer-in behavior of the first card application. If the data transfer-out behavior and the data transfer-in behavior of the first card application meet the relay attack condition, the SE performs defense processing. Compared with solutions in the current technology, in the embodiments of this application, when internal processing logic of a card application or a card reader (such as a POS machine) does not need to be modified, an identity verification operation does not need to be additionally performed on a user, or a dedicated interference device (such as a tin-paper shell or a tin-paper cover) does not need to be purchased, the SE can detect and defend against the relay attack through function extension. The implementation is relatively simple, imposes no impact on an application developer and a card reader vendor, and does not affect user experience and does not increase user costs.

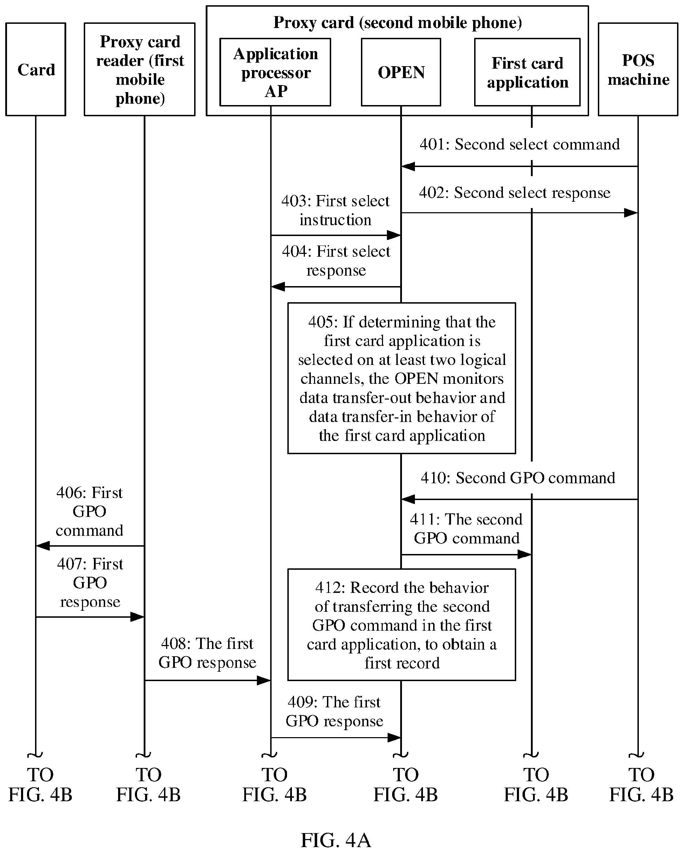

In the embodiments of this application, a terminal is subsequently refined into an application processor AP, an OPEN module in an SE, or a first card application, and different embodiment solutions are provided from two perspectives: An AP actively relays data to a first card application, and a first card application actively relays data to an AP. Details are shown in the following embodiments shown in FIG. 4A to FIG. 5B.

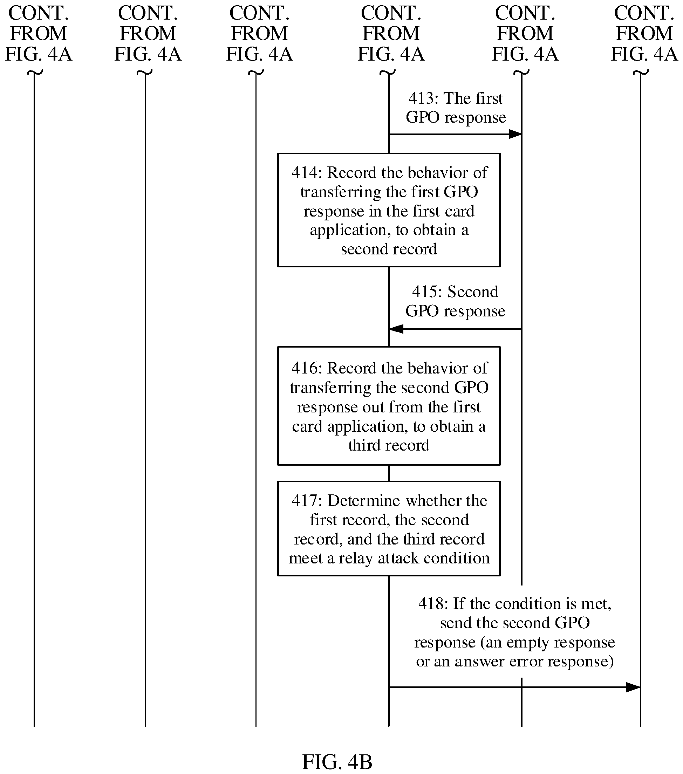

FIG. 4A and FIG. 4B are a schematic diagram of an embodiment of a relay attack processing method according to an embodiment of this application. This embodiment is specific to a case in which the AP actively relays the data (for example, a GPO response remotely obtained from a proxy reader (proxy reader)) to the first card application, that is, before receiving a GPO command sent by a POS, an OPEN receives the GPO response sent by the AP; or after receiving a GPO command sent by a POS and transferring the GPO command in the first card application, and before receiving a GPO response transferred by the first card application, an OPEN receives the GPO response sent by the AP. Alternatively, from a perspective of the first card application, before receiving through one LC, a GPO command transferred by an OPEN, the first card application first receives through another LC, a GPO response transferred by the OPEN; or after receiving through one LC, a GPO command transferred by an OPEN, and before transferring the command or any response to the OPEN, the first card application first receives through another LC, the GPO response re-transferred by the OPEN.

In this embodiment, after determining that the first card application is selected on an LC, an SE triggers monitoring whether the first card application is selected on another LC and monitors data transfer-out behavior and data transfer-in behavior of the first card application (for example, parse and record data transferred in the first card application or data transferred out from the first card application, where three pieces of information may be recorded in this embodiment), to determine whether a relay attack will occur or is occurring. Specifically, a process may include the following phases.

Phase 1: The OPEN determines that the first card application is selected on at least one logical channel.

First, the OPEN receives, through a second logical channel, a select command sent by the POS machine, and returns a select response to the POS machine, so that the first card application is selected by the POS machine. For details, refer to the following steps 401 and 402.

401: The POS machine sends a second select command to the OPEN of a second mobile phone.

Specifically, the OPEN of the second mobile phone receives, through the second logical channel, the second select command sent by a point of sale terminal. The second select command includes a first card application identifier. For example, the second logical channel is a logical channel (logical channel, LC) established on a contactless interface (contactless interface), that is, a channel created between the POS machine and the second mobile phone based on NFC or an ISO 14443 technical protocol. Specifically, the second logical channel is a communication channel between the POS machine and the SE. Further, the second logical channel is a communication channel between the POS machine and the OPEN in the SE, or a communication channel between the POS machine and the first card application in the SE by the OPEN.

It should be noted that the second mobile phone herein may be considered as a proxy card. The second mobile phone may include an application processor AP and an SE. The SE further includes an OPEN and a first card application. The first card application is a card application stored on the SE.

402: The OPEN of the second mobile phone sends a second select response to the POS machine.

First, the OPEN receives, through a first logical channel, a select command sent by the AP, and returns a select response to the AP, so that the first card application is selected by the AP. For details, refer to the following steps 403 and 404.

403: The OPEN of the second mobile phone receives a first select command sent by the application processor.

Specifically, the OPEN receives, through the first logical channel, the first select command sent by the AP. The first select command includes the first card application identifier. For example, the first logical channel is a logical channel (logical channel, LC) established on a contact interface (contact interface), that is, a channel created between the application processor AP and the second mobile phone based on an ISO 7816-1 technical protocol and an ISO 7816-2 technical protocol. Specifically, the first logical channel is a communication channel between the AP and the SE. Further, the first logical channel is a communication channel between the AP and the OPEN in the SE, or a communication channel between the AP and the first card application in the SE by the OPEN.

404: The OPEN sends the first select response to the AP.

It should be noted that, steps 401 to 404 are an example of a process in which the OPEN determines that the first card application is selected on at least one logical channel, and both the first select command and the second select command include the AID of the first card application. For a specific format, refer to a select command SELECT Command defined in an existing EMV protocol or an existing PBOC protocol. A time sequence of steps 401 and 402 and steps 403 and 404 is not limited. For example, the first card application may also be first selected by the AP, and then selected by the POS machine.

Phase 2: Based on a condition in Phase 1, the OPEN is triggered to monitor the data transfer-out behavior and the data transfer-in behavior of the first card application.

405: If determining that the first card application is selected on at least two logical channels, the OPEN monitors the data transfer-out behavior and the data transfer-in behavior of the first card application.

Further, that the SE monitors data transfer-out behavior and data transfer-in behavior of the first card application may include: The SE parses message headers of transfer-out data and transfer-in data of the first card application to obtain corresponding message types and logic channel numbers. When the message type is a preset message type, the SE records at least the logic channel numbers and behavior types of the transfer-out data and the transfer-in data of the first card application. The behavior type is transfer-in behavior or transfer-out behavior.

In an optional implementation, that the OPEN monitors the data transfer-out behavior and the data transfer-in behavior of the first card application may be implemented through recording. Specifically, when receiving a message (for example, a GPO command or a GPO response) from the outside (relative to the SE, the outside may be understood as the POS machine or the AP), the OPEN records the message. Alternatively, when receiving a message from the inside (relative to the SE, the inside may be understood as the first card application), the OPEN records the message.

More specifically, the OPEN needs to parse a message header header of each received message, and then records the message based on parsed content. For details, refer to detailed explanations in the subsequent Phase 3.

Further, if the first card application is a preset application and is selected by the at least two logical channels, the data transfer-out behavior and the data transfer-in behavior of the first card application are monitored. Alternatively, if the selected first card application is a preset application, it is monitored whether the first card application is selected on another logical channel, and the data transfer-out behavior and the data transfer-in behavior of the first card application are monitored. It may be understood that the preset application may be a card application of a payment type, an access control type, or the like. For example, when the OPEN parses a message header header of a message, if a message indicated by an instruction byte (instruction byte, INS) is a specific instruction (for example, a GPO command/response or a read command/response required by a payment card application), the foregoing monitoring and the following recording operations are performed. Otherwise, these operations are not performed.

Phase 3: The OPEN analyzes and records the data transfer-out behavior and the data transfer-in behavior of the first card application.

First, after receiving a second GPO command from the POS machine, the OPEN forwards the second GPO command to the first card application, and records the data transfer-in behavior of the first card application. Details are shown in the following steps 410 to 412.

410: The POS machine sends the second GPO command to the OPEN.

The second GPO command is sent through the second logical channel.

411: The OPEN sends the second GPO command to the first card application.

It should be noted that the behavior of sending data by the OPEN to the first card application is the data transfer-in behavior of the first card application.

412: The OPEN records the behavior of transferring the second GPO command in the first card application, to obtain a first record.

Specifically, the OPEN needs to parse a received message, for example, parse the GPO command/response and the read command/response. Specifically, the OPEN needs to parse a message header (Header) of each received message to obtain a logical channel LC number and a message type. For example, the OPEN parses a class byte (class byte, CLA) and an instruction byte (instruction byte, INS) in the header to separately determine the LC number and the message type. In addition, a behavior type corresponding to each message is determined. The behavior type may be the transfer-in behavior or the transfer-out behavior, and may be understood as determining whether the received message is the transfer-in behavior or the transfer-out behavior for the first card application.

In this embodiment, specific recorded content may be the logical channel LC number, the message type, and the behavior type. For example, an implementation form of the first record is: [LC number: Second logical channel; Message type: GPO command; Behavior type: Transfer-in]. Certainly, the record form may alternatively be in another form. This is not limited in this embodiment of this application.

Then, after obtaining a first GPO response from the AP, the OPEN forwards the first GPO response to the first card application, and records the data transfer-in behavior of the first card application. The first GPO response is obtained by a first mobile phone (namely, another device relative to an attacker, used as a card reader) from a card (for example, a card of an attacked user or a mobile phone card simulation application) by using a GPO command. Details are shown in the following steps 406 to 409 and steps 413 and 414.

406: The first mobile phone sends a first GPO command to the card.

The first mobile phone herein may be considered as a proxy card reader. The first GPO command is used to request, from the card, key information necessary for a transaction, for example, information such as a signature and ciphertext.

407: The card sends a first GPO response to the first mobile phone.

The first GPO response may be understood as data that is relayed from another device and that is used to perform the relay attack.

408: The first mobile phone sends the first GPO response to the AP of the second mobile phone.

409: The AP sends the first GPO response to the OPEN.

Specifically, the AP sends the first GPO response to the OPEN through the first logical channel.

413: The OPEN sends the first GPO response to the first card application.

It should be noted that the behavior of sending data by the OPEN to the first card application is the data transfer-in behavior of the first card application.

414: The OPEN records the behavior of transferring the first GPO response in the first card application, to obtain a second record.

After receiving, through the first logical channel, the first GPO response sent by the AP, the OPEN sends the first GPO response to the first card application through the first logical channel. It should be noted that, the first GPO response is the transfer-in data for the first card application. Therefore, the OPEN records the first GPO response as the transfer-in data of the first card application, to obtain the second record.

It may be understood that, a manner in which the OPEN processes the first GPO response is similar to the foregoing step 412, and a manner of recording information and the behavior related to the message in this step is also similar to the foregoing step 412. For example, content recorded in this step may be a logical channel LC number, a message type and a behavior type. For example, an implementation form of the second record is: [LC number: First logical channel; Message type: GPO response; Behavior type: Transfer-in].

It should be noted that a time sequence of steps 410 to 412 and steps 406 to 409 is not limited. To be specific, in this embodiment of this application, before receiving the second GPO command sent by the POS machine, the OPEN may receive, the first GPO response sent by the AP; or after receiving the second GPO command sent by the POS machine and transferring the second GPO command to the first card application, and before receiving the second GPO response transferred by the first card application, the OPEN receives the first GPO response sent by the AP. Alternatively, from the perspective of the first card application, before receiving, through one LC, the second GPO command transferred by the OPEN, the first card application first receives through another LC, the first GPO response transferred by the OPEN; or after receiving the second GPO command transferred by the OPEN through one LC, and before any response of the second GPO command is transferred by the OPEN, the first card application first receives through another LC, the first GPO response transferred by the OPEN.

Finally, after receiving the second GPO response sent by the first card application, the OPEN records the data transfer-out behavior of the first card application. Details are shown in the following steps 415 and 416.

415: The first card application sends the second GPO response to the OPEN.

It should be noted that the behavior of sending data by the first card application to the OPEN is the data transfer-out behavior of the first card application.

416: The OPEN records the behavior of transferring the second GPO response out from the first card application, to obtain a third record.

It should be noted that the second GPO response is a response reconstructed based on the first GPO response. The first GPO response is sent through the first logical channel, and the second GPO response is sent through the second logical channel. Alternatively, it may also be understood that the first GPO response and the second GPO response are essentially the same, and only a GPO response received through the first logical channel is sent through the second logical channel. Herein, the GPO response received through the first logical channel is referred to as the first GPO response, and the GPO response sent through the second logical channel is referred to as the second GPO response.

It may be understood that, a manner in which the OPEN processes the second GPO response is similar to the foregoing step 412, and a manner of recording information and the behavior related to the message in this step is also similar to the foregoing step 412. For example, content recorded in this step may be a logical channel LC number, a message type and a behavior type. For example, an implementation form of the third record is: [LC number: Second logical channel; Message type: GPO response; Behavior type: Transfer-out].

Phase 4: The OPEN determines, based on records about the data transfer-in behavior and the data transfer-out behavior of the first card application, whether a relay attack condition is met. Details are shown in steps 417 and 418.

417: The OPEN determines whether the first record, the second record, and the third record meet the relay attack condition.

It should be noted that the relay attack condition described herein may be: (1) a same message (of a same message type) is first transferred in through one LC and then transferred out through another LC, for example, the second record and the third record; and (2) On the same LC, a message is first transferred in and then another message is transferred out, for example, the first record and the third record.

418: If the condition is met, the OPEN sends the second GPO response to the POS machine.

When the first record, the second record, and the third record, that is, the data transfer-in behavior and the data transfer-out behavior of the first card application meet the relay attack condition, the second GPO response herein may be an empty response or an answer error response. Alternatively, the OPEN may not send the second GPO response to the POS.

Optionally, when the relay attack condition is met, the SE, the first card application, or both the SE and the first card application may be locked. Further, a relay attack detection result may also be recorded.

When the first record, the second record, and the third record do not meet the relay attack condition, the OPEN sends the second GPO response to the POS machine. The second GPO response herein is a normal answer response.

Further, data is read between the OPEN and the POS machine, for example, information such as a random number Nc and a card public key certificate. The data read process herein occurs after the GPO command response in the existing EMV protocol or the existing PBOC protocol, and is specifically used to read a public key certificate, a random number, and the like of the card/card application. In this way, a signature (SDAD) and ciphertext (AC) obtained in the foregoing GPO command response interaction process are verified. A process of processing the read command/response is similar to the foregoing process, because the relay attack may occur in the message interaction process. Alternatively, it may be possible that a possibility of the relay attack is not successfully detected in the foregoing process of processing the GPO command/response message.

It may be understood that the foregoing process of monitoring and determining the data transfer-out behavior and the data transfer-in behavior is applied to the GPO command/response in this embodiment, applied to the read command/response, applied to both the GPO command/response and the read command/response; and also applied to another command/response. This is not specifically limited herein.

It should be noted that, in the foregoing embodiment, if the first card application is selected on the at least two logical channels, and/or the first card application is the preset application, the data transfer-out behavior and the data transfer-in behavior of the first card application are monitored to determine whether the relay attack will occur or is occurring. These technical features may be implemented by the OPEN. For example, an existing velocity checking mechanism of the OPEN is extended, that is, a mechanism for actively detecting, processing, and managing a security-sensitive wave in the SE is extended, so that the OPEN can monitor behavior related to the first card application, and process and record a detected relay attack event. Certainly, another manner is not excluded in this embodiment of this application. For example, a function of the existing OPEN is not extended, but an independent functional module is added for implementation.

In this embodiment of this application, a function of the SE is extended, and relay attack detection and defense can be implemented based on the foregoing three transfer-in or transfer-out records. Compared with that in several existing solutions, when internal processing logic of the card application or the card reader (for example, the POS machine) does not need to be modified, an identity verification operation does not need to be additionally performed on a user, or a dedicated interference device (such as a tin-paper shell or a tin-paper cover) does not need to be purchased, the SE can detect and defend against the relay attack through function extension. The implementation is relatively simple, imposes no impact on an application developer and a card reader vendor, and does not affect user experience and does not increase user costs.

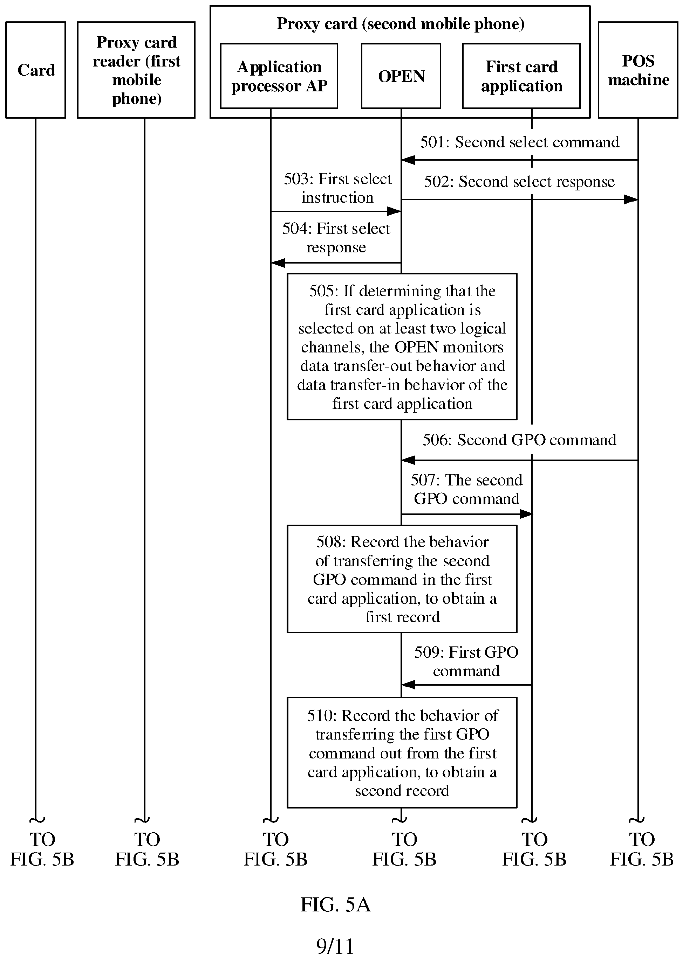

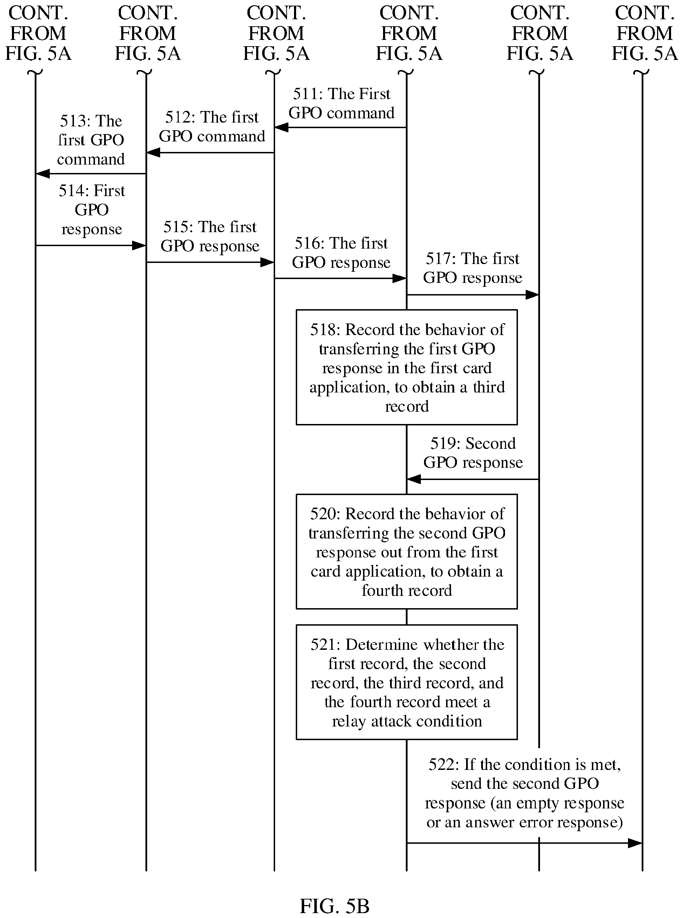

FIG. 5A and FIG. 5B are a schematic diagram of another embodiment of a relay attack processing method according to an embodiment of this application. This embodiment is specific to a case in which the first card application actively relays the data (for example, a GPO command obtained from a POS) to the AP, that is, after receiving the GPO command sent by the POS and transferring the GPO command in the first card application, an OPEN receives the GPO command that is originally transferred out by the first card application without any change. From a perspective of the first card application, after receiving a GPO command transferred through one LC by using the OPEN, the first card application directly transfers through another LC, the command in the AP by using the OPEN.

In this embodiment, after determining that the first card application is selected on a plurality of LCs, an SE triggers recording data transferred in the application or data transferred out from the application (for example, parsing and recording the data transferred in the first card application or the data transferred out from the first card application, where four pieces of information may be recorded in this embodiment), to determine whether a relay attack will occur or is occurring. Specifically, a process may include the following phases.

Phase 1: The OPEN determines that the first card application is selected on at least one logical channel.

501: The POS machine sends a second select command to the OPEN of a second mobile phone.

502: The OPEN sends a second select response to the POS machine.

503: The OPEN receives a first select command sent by the application processor AP.

504: The OPEN sends a first select response to the AP.

It should be noted that steps 501 to 504 are similar to steps 401 to 404 shown in FIG. 4A, and details are not described herein again.

Phase 2: Based on a condition in Phase 1, the OPEN is triggered to monitor data transfer-out behavior and data transfer-in behavior of the first card application.

505: If determining that the first card application is selected on at least two logical channels, the OPEN monitors the data transfer-out behavior and the data transfer-in behavior of the first card application.

It should be noted that step 505 is similar to step 405 shown in FIG. 4A, and details are not described herein again.

Phase 3: The OPEN analyzes and records the data transfer-out behavior and the data transfer-in behavior of the first card application.

First, after receiving a second GPO command from the POS machine, the OPEN forwards the second GPO command to the first card application, and records the data transfer-in behavior of the first card application. Details are shown in the following steps 506 to 508.

506: The POS machine sends the second GPO command to the OPEN.

The second GPO command is sent through a second logical channel.

507: The OPEN sends the second GPO command to the first card application.

It should be noted that the behavior of sending data by the OPEN to the first card application is the data transfer-in behavior of the first card application.

508: The OPEN records the behavior of transferring the second GPO command in the first card application, to obtain a first record.

It should be noted that the OPEN needs to parse a received message, for example, parse a GPO command/response and a read command/response. A manner in which the OPEN processes the second GPO command is similar to step 412 shown in FIG. 4A, and a manner of recording information and the behavior related to the message in this step is also similar to step 412 shown in FIG. 4A.

In this embodiment, specific recorded content may be a logical channel LC number, a message type, and a behavior type. For example, an implementation form of the first record is: [LC number: Second logical channel; Message type: GPO command; Behavior type: Transfer-in]. Certainly, the record form may alternatively be in another form. This is not limited in this embodiment of this application.

Then, after receiving a first GPO command from the first card application, the OPEN forwards the first GPO command to the AP, and records the data transfer-out behavior of the first card application. Details are shown in the following steps 509 to 513.

509: The first card application sends the first GPO command to the OPEN.

It should be noted that the behavior of sending data by the first card application to the OPEN is the data transfer-out behavior of the first card application. 510: The OPEN records the behavior of transferring the first GPO command out from the first card application, to obtain a second record.

It should be noted that the first GPO command is a command reconstructed based on the second GPO command. The second GPO command is sent through the second logical channel, and the first GPO command is sent through a first logical channel. Alternatively, it may also be understood that the first GPO command and the second GPO command are essentially the same, and only a GPO command received through the second logical channel is sent through the first logical channel. Herein, the GPO command received through the second logical channel is referred to as the second GPO command, and the GPO command sent through the first logical channel is referred to as the first GPO command.

It can be understood that a manner in which the OPEN processes the first GPO command is similar to step 412 shown in FIG. 4A, and a manner of recording information and the behavior related to the message in this step is also similar to step 412 shown in FIG. 4A. For example, recorded content in this embodiment may be a logical channel LC number, a message type, and a behavior type. For example, an implementation form of the second record is: [LC number: First logical channel; Message type: GPO command; Behavior type: Transfer-out].

511: The OPEN sends the first GPO command to the AP.

The first GPO command herein is used to request, from a card, key information necessary for a transaction, for example, information such as a signature and ciphertext.

512: The AP sends the first GPO command to a first mobile phone.

513: The first mobile phone sends the first GPO command to the card.

Then, after obtaining a first GPO response from the AP, the OPEN forwards the first GPO response to the first card application, and records the data transfer-in behavior of the first card application. The first GPO response is obtained by the first mobile phone (namely, another device relative to an attacker, used as a card reader) from the card (for example, a card of an attacked user or a mobile phone card simulation application) by using a GPO command. Details are shown in the following steps 514 to 518.

514: The card sends the first GPO response to the first mobile phone.

The first GPO response herein may be understood as data that is relayed from another device and that is used to perform the relay attack.

515: The first mobile phone sends the first GPO response to the AP of the second mobile phone.

516: The AP sends the first GPO response to the OPEN.

517: The OPEN sends the first GPO response to the first card application.

It should be noted that the behavior of sending data by the OPEN to the first card application is the data transfer-in behavior of the first card application.

518: The OPEN records the behavior of transferring the first GPO response in the first card application, to obtain a third record.

After receiving, through the first logical channel, the first GPO response sent by the AP, the OPEN sends the first GPO response to the first card application through the first logical channel.

It can be understood that a manner in which the OPEN processes the first GPO response is similar to step 412 shown in FIG. 4A, and a manner of recording information and the behavior related to the message in this step is also similar to step 412 shown in FIG. 4A. For example, recorded content in this embodiment may be a logical channel LC number, a message type, and a behavior type. For example, an implementation form of the third record is: [LC number: First logical channel; Message type: GPO response; Behavior type: Transfer-in].

Finally, after receiving a second GPO response sent by the first card application, the OPEN records the data transfer-out behavior of the first card application. Details are shown in the following steps 519 and 520.

519: The first card application sends the second GPO response to the OPEN.

It should be noted that the behavior of sending data by the first card application to the OPEN is the data transfer-out behavior of the first card application.

520: The OPEN records the behavior of transferring the second GPO response out from the first card application, to obtain a fourth record.

It should be noted that the second GPO response is a response reconstructed based on the first GPO response. The first GPO response is sent through the first logical channel, and the second GPO response is sent through the second logical channel. Alternatively, it may also be understood that the first GPO response and the second GPO response are essentially the same, and only a GPO response received through the first logical channel is sent through the second logical channel. Herein, the GPO response received through the first logical channel is referred to as the first GPO response, and the GPO response sent through the second logical channel is referred to as the second GPO response.

It can be understood that a manner in which the OPEN processes the second GPO response is similar to step 412 shown in FIG. 4A, and a manner of recording information and the behavior related to the message in this step is also similar to step 412 shown in FIG. 4A. For example, recorded content in this embodiment may be a logical channel LC number, a message type, and a behavior type. For example, an implementation form of the fourth record is: [LC number: Second logical channel; Message type: GPO response; Behavior type: Transfer-out].

Phase 4: The OPEN determines, based on records about the data transfer-in behavior and the data transfer-out behavior of the first card application, whether a relay attack condition is met. Details are shown in steps 521 and 522.

521: The OPEN determines whether the first record, the second record, the third record, and the fourth record meet the relay attack condition.

It should be noted that, the relay attack condition described herein may be: (1) a same message (of a same message type) is first transferred in through one LC, and then transferred out through another LC, for example, the first record and the second record, and the third record and the fourth record; and (2) On a same LC, a message is first transferred in and then another message is transferred out, for example, the first record and the fourth record; or a message is first transferred out, and then another message is transferred in, for example, the second record and the third record.

522: If the condition is met, the OPEN sends the second GPO response to the POS machine.

When the first record, the second record, the third record, and the fourth record, that is, the data transfer-in behavior and the data transfer-out behavior of the first card application meet the relay attack condition, the second GPO response herein may be an empty response or an answer error response. Alternatively, the OPEN may not send the second GPO response to the POS. Optionally, when the relay attack condition is met, the SE, the first card application, or both the SE and the first card application may be locked. Further, a relay attack detection result may also be recorded.

Optionally, when the first record, the second record, the third record, and the fourth record do not meet the relay attack condition, the OPEN sends the second GPO response to the POS machine. The second GPO response herein is a normal answer response.

It may be understood that the foregoing process of monitoring and determining the data transfer-out behavior and the data transfer-in behavior is applied to the GPO command/response in this embodiment, applied to the read command/response, applied to both the GPO command/response and the read command/response; and also applied to another command/response. This is not specifically limited herein.

This embodiment of this application is specific to the case in which the first card application actively relays the data (for example, the GPO command obtained from the POS) to the AP, that is, the OPEN receives, after receiving the GPO command sent by the POS and transferring the GPO command in the first card application, the GPO command that is originally transferred out by the first card application without any change. From the perspective of the first card application, the first card application directly transfers through another LC, after receiving the GPO command transferred through one LC by using the OPEN, the GPO command in the AP by using the OPEN.

In this embodiment of this application, a function of the SE is extended, and relay attack detection and defense can be implemented based on the foregoing four transfer-in or transfer-out records. Compared with that in several existing solutions, when internal processing logic of the card application or the card reader (for example, the POS machine) does not need to be modified, an identity verification operation does not need to be additionally performed on a user, or a dedicated interference device (such as a tin-paper shell or a tin-paper cover) does not need to be purchased, the SE can detect and defend against the relay attack through function extension. The implementation is relatively simple, imposes no impact on an application developer and a card reader vendor, and does not affect user experience and does not increase user costs.

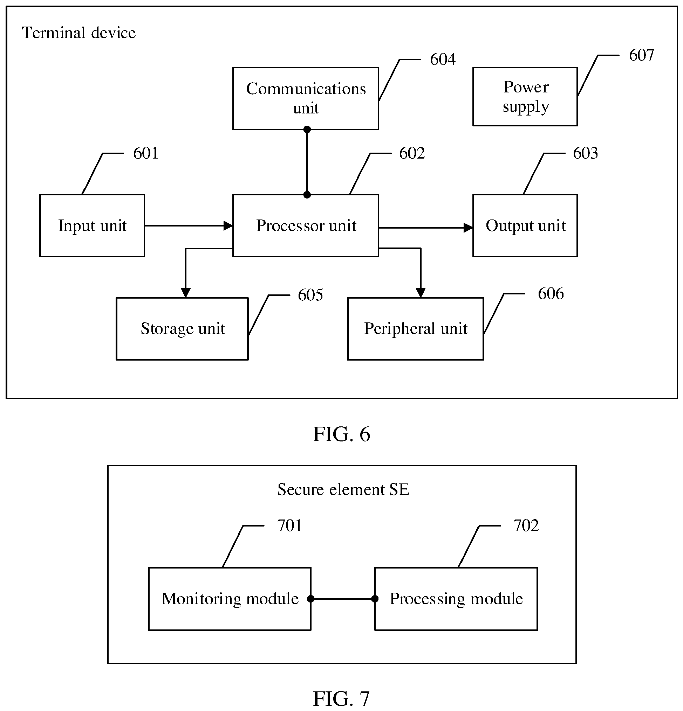

The following describes an apparatus part in the technical solutions of this application. FIG. 6 is a schematic diagram of an embodiment of a terminal device to which a secure element SE is applied according to an embodiment of this application.

The terminal device may include components such as an input unit 601, a processor unit 602, an output unit 603, a communications unit 604, a storage unit 605, and a peripheral unit 606. The components perform communication through one or more buses. Persons skilled in the art may understand that a structure of the terminal device shown in FIG. 6 constitutes no limitation on this application. The structure may be a bus structure or a star structure, and may alternatively include more or fewer components than those shown in the figure, combine some components, or have different component arrangements. In this implementation of this application, the terminal device may be any mobile or portable electronic device, including but not limited to a mobile phone, a mobile computer, a tablet computer, a personal digital assistant (personal digital assistant, PDA), a wearable device (wearable device), and a combination of the foregoing two or more items.

The input unit 601 is configured to implement interaction between a user and the terminal device and/or input information to the terminal device. For example, the input unit 601 may receive digital or character information entered by the user, to generate signal input related to user setting or function control. In a specific implementation of this application, the input unit 601 may be a touch panel, may be another human-machine interaction interface such as a physical input key or a microphone, or may be another external information capture apparatus such as a camera. The touch panel, also referred to as a touchscreen or a touch control screen, may collect a touch operation action or an approaching operation action performed by the user on the touch panel, such as an operation action performed by the user on the touch panel or at a position near the touch panel by using any appropriate object or accessory such as a finger or a stylus, and drive a corresponding connection apparatus according to a preset program. Optionally, the touch panel may include two parts: a touch detection apparatus and a touch controller. The touch detection apparatus detects a touch operation of the user, converts the detected touch operation into an electrical signal, and transmits the electrical signal to the touch controller. The touch controller receives the electrical signal from the touch detection apparatus, converts the electrical signal into contact coordinates, and then sends the contact coordinates to a processing unit. The touch controller may further receive a command sent by the processing unit and execute the command. In addition, the touch panel may be implemented by using a plurality of types, such as a resistive type, a capacitive type, an infrared (Infrared) type, and a surface acoustic wave type. In another implementation of this application, the physical input key used by the input unit 601 may include but is not limited to one or more of a physical keyboard, a function key (such as a volume control key or an on/off key), a trackball, a mouse, and a joystick. The input unit 601 in a microphone form may collect a voice input by the user or an environment, and convert the voice into a command that is in an electrical signal form and that may be executed by the processing unit.

In a specific implementation of this application, both an application on an REE side and a card application on an SE side may relate to the input unit 601. For example, a specific action is selecting or setting an application by using the touchscreen.

The processor unit 602, as a control center of the terminal device, is connected to various parts of the entire terminal device through various interfaces and lines, and implements various functions of the terminal device and/or processes data by running or executing a software program and/or module stored in the storage unit 605 and invoking data stored in the storage unit 605. The processor unit 602 may include an integrated circuit (integrated circuit, IC), for example, may include a single packaged IC, or may be formed by connecting a plurality of packaged ICs having a same function or different functions. For example, the processor unit 602 may include only a central processing unit (central processing unit, CPU for short), and may be a combination of a GPU, a digital signal processor (digital signal processor, DSP for short), and a control chip (for example, a baseband chip) in the communications unit 604. In this implementation of this application, the CPU may be a single computing core, or may include a plurality of computing cores.

In a specific implementation of this application, actions of both the application on the REE side and the card application on the SE side relate to the processor. For a specific action, refer to the foregoing embodiment.

The communications unit 604 is configured to establish a communications channel, so that the terminal device connects to a remote server through the communications channel and downloads media data from the remote server. The communications unit 604 may include a communications module such as a wireless local area network (wireless local area network, wireless LAN for short) module, a Bluetooth module, an NFC module, or a baseband (base band) module, and a radio frequency (radio frequency, RF for short) circuit corresponding to the communications module, and is configured to perform wireless local area network communication, Bluetooth communication, NFC communication, infrared communication, and/or communication in a cellular communications system, for example, wideband code division multiple access (wideband code division multiple access, W-CDMA for short), and/or high speed downlink packet access (high speed downlink packet access, HSDPA for short). The communications module is configured to control communication between all the components in the terminal device, and may support direct memory access (direct memory access).

The radio frequency circuit is configured to receive and send a signal in an information receiving or sending process or a call process. For example, after receiving downlink information from a base station, the radio frequency circuit sends the downlink information to a processing unit for processing, and the radio frequency circuit sends designed uplink data to the base station. For another example, after receiving information sent by an external NFC device, the radio frequency circuit sends the information to a processing unit for processing and sends a processing result to the external NFC device. Usually, the radio frequency circuit includes a well-known circuit used to perform these functions, including but not limited to an antenna system, a radio frequency transceiver, one or more amplifiers, a tuner, one or more oscillators, a digital signal processor, a codec (codec) chipset, a subscriber identity module (SIM) card, a memory, and the like. In addition, the radio frequency circuit may further communicate with a network and another device through wireless communication. The wireless communication may use any communications standard or protocol, including but not limited to a GSM (global system of mobile communication, global system for mobile communications), a GPRS (general packet radio service, general packet radio service), CDMA (code division multiple access, code division multiple access), WCDMA (wideband code division multiple access, wideband code division multiple access), a high speed uplink packet access technology (high speed uplink packet access, HSUPA), LTE (long term evolution, long term evolution), an email, an SMS (short messaging service, short message service), and the like.

In a specific embodiment of this application, interaction between the card application in the SE and a POS machine relates to the communications unit 604. A possible manner is, for example, NFC communication. Certainly, another manner is not excluded. Interaction between the terminal and another remote mobile phone (for example, a mobile phone of an attacker used as a card reader proxy reader) by using the AP also relates to the communications unit 604, for example, by using a baseband module.

The output unit 603 includes but is not limited to an image output unit and a voice output unit. The image output unit is configured to output a text, an image, and/or a video. The image output unit may include a display panel, for example, a display panel configured in a form of an LCD (liquid crystal display, liquid crystal display), an OLED (organic light-emitting diode, organic light-emitting diode), or a field emission display (field emission display, FED for short). Alternatively, the image output unit may include a reflective display, for example, an electrophoretic (electrophoretic) display, or a display using a technology of interferometric modulation of light (interferometric modulation of light). The image output unit may include a single display or a plurality of displays of different sizes. In a specific implementation of this application, the touch panel used for the input unit 601 can also serve as the display panel of the output unit 603. For example, after detecting a touch gesture operation or an approaching gesture operation on the touch panel, the touch panel transmits the operation to a processing unit to determine a type of a touch event. Then, the processing unit provides corresponding visual output on the display panel based on the type of the touch event. In FIG. 1, the input unit 601 and the output unit 603 serve as two independent parts to implement input and output functions of the terminal device. However, in some embodiments, the touch panel and the display panel may be integrated to implement the input and output functions of the terminal device. For example, the image output unit may display various graphical user interfaces (graphical user interface, GUI for short) as virtual control components, including but not limited to a window, a scroll bar, an icon, and a scrap book, to be operated by a user in a touch manner.

In a specific implementation of this application, the image output unit includes a filter and an amplifier that are configured to filter and amplify a video output by a processing unit. An audio output unit includes a digital-to-analog converter, configured to convert an audio signal output by a processing unit from a digital format to an analog format.

The storage unit 605 may be configured to store a software program and a module, and a processing unit executes various function applications of the terminal device and implements data processing by running the software program and the module stored in the storage unit 605. The storage unit 605 mainly includes a program storage area and a data storage area. The program storage area may store an operating system, an application program required by at least one function, such as an audio playing program or an image playing program; and the data storage area may store data (such as audio data or a phone book) created based on use of the terminal device, and the like. In a specific implementation of this application, the storage unit 605 may include a volatile memory such as a nonvolatile dynamic random access memory (nonvolatile random access memory, NVRAM for short), a phase change random access memory (phase change RAM, PRAM for short), and a magnetoresistive random access memory (magnetoresistive RAM, MRAM for short). The storage unit 605 may further include a nonvolatile memory such as at least one disk storage device, an electrically erasable programmable read-only memory (electrically erasable programmable read-only memory, EEPROM for short), and a flash memory such as a NOR flash memory (NOR flash memory) or a NAND flash memory (NAND flash memory). The nonvolatile memory stores an operating system and an application program executed by a processing unit. The processing unit loads a running program and data from the nonvolatile memory to a memory and stores digital content in a mass storage apparatus. The operating system includes various components and/or drives that are configured to control and manage regular system tasks such as memory management, storage device control, and power management, and that facilitate communication between various software and hardware. In this implementation of this application, the operating system may be an Android system of Google, an iOS system developed by Apple, a Windows operating system developed by Microsoft, or an embedded operating system such as VxWorks.

The application program includes any application installed on the terminal device, including but not limited to a browser, email, instant messaging service, text processing, keyboard virtualization, widget (Widget), encryption, digital rights management, speech recognition, speech replication, positioning (for example, a function provided by a global positioning system), music playing, or the like.

In a specific embodiment of this application, the terminal may be related to data storage, for example, storage of an application program and user data. For details, refer to the foregoing embodiments.

A power supply 607 is configured to supply power to different parts of the terminal device to maintain running of the parts. Generally, the power supply may be a built-in battery, for example, a common lithium-ion battery or a nickel-metal hydride battery; and may also include an external power supply that directly supplies power to the terminal device, for example, an AC adapter. In some implementations of this application, the power supply 607 may be further defined in a wider scope, for example, may further include a power management system, a charging system, a power failure detection circuit, a power converter or inverter, a power status indicator (such as a light-emitting diode), and any other components related to power generation, management, and distribution of the terminal device.

FIG. 7 is a schematic diagram of an embodiment of a secure element SE according to an embodiment of this application. The SE is applied to the terminal shown in FIG. 6, and the SE may include:
a monitoring module 701, configured to: if the SE determines that a first card application is selected, monitor data transfer-out behavior and data transfer-in behavior of the first card application, where the first card application is a card application stored in the SE; and
a processing module 702, configured to: if the data transfer-out behavior and the data transfer-in behavior meet a relay attack condition, perform defense processing.

According to the invention, the relay attack condition includes: the first card application receives a first message through a first logical channel, and sends the first message through a second logical channel.

Optionally, in some embodiments of this application, the relay attack condition may further include: before sending the first message through the second logical channel, the first card application receives a second message through the second logical channel.

Optionally, in some embodiments of this application, the relay attack condition may further include: before sending the first message through the second logical channel, the first card application receives a second message through the second logical channel and sends the second message through the first logical channel.

Optionally, in some embodiments of this application, the first message includes a get processing option GPO response, and the second message includes a GPO command. Alternatively, the first message includes a read read response, and the second message includes a read command.

Optionally, in some embodiments of this application, the first logical channel is a logical channel between the SE and an application processor, and the second logical channel is a logical channel between the SE and a point of sale terminal.

Optionally, in some embodiments of this application,
the monitoring module 701 is specifically configured to: parse message headers of transfer-out data and transfer-in data of the first card application to obtain corresponding message types and logical channel numbers; and when the message type is a preset message type, record at least the logical channel numbers and behavior types of the transfer-out data and the transfer-in data of the first card application, where the behavior type is transfer-in behavior or transfer-out behavior.

Optionally, in some embodiments of this application, the preset message type includes a get processing option GPO response, a GPO command, a read read response, or a read command.

Optionally, in some embodiments of this application,
the monitoring module 701 is specifically configured to: obtain a first select command through the first logical channel; and if the first select command includes a first card application identifier, determine that the first card application is selected.

Alternatively,
the monitoring module 701 is specifically configured to: obtain a first select command through the first logical channel, and obtain a second select command through the second logical channel; and if the first select command includes a first card application identifier and the second select command includes the first card application identifier, determine that the first card application is selected.

Optionally, in some embodiments of this application,
the monitoring module 701 is further configured to determine the first card application as a preset application.

Optionally, in some embodiments of this application,
the processing module 702 is further configured to: skip sending data to a point-of-sale terminal; or send empty data to a point-of-sale terminal.

Optionally, in some embodiments of this application,
the processing module 702 is further configured to: lock the first card application; or lock the SE.

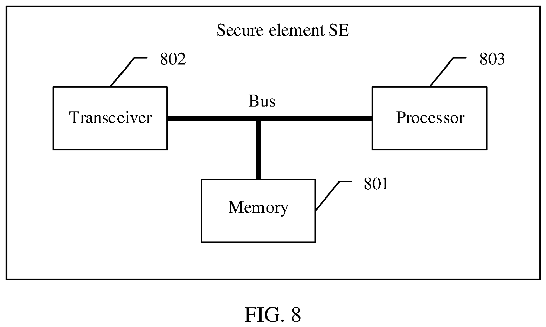

FIG. 8 is a schematic diagram of an embodiment of a secure element SE according to an embodiment of this application. The SE may include:
a memory 801, a transceiver 802, a processor 803, and a bus, where the memory 801, the transceiver 802, and the processor 803 are connected through the bus.

The transceiver 802 is configured to communicate with an apparatus other than the SE.

The memory 801 is configured to store a computer-executable instruction.

The processor 803 is configured to: execute the computer-executable instruction stored in the memory; if it is determined that a first card application is selected, monitor data transfer-out behavior and data transfer-in behavior of the first card application, where the first card application is a card application stored in the SE; and if the data transfer-out behavior and the data transfer-in behavior meet a relay attack condition, perform defense processing.

According to the invention, the relay attack condition includes: the first card application receives a first message through a first logical channel, and sends the first message through a second logical channel.

Optionally, in some embodiments of this application, the relay attack condition further includes: Before sending the first message through the second logical channel, the first card application receives a second message through the second logical channel.

Optionally, in some embodiments of this application, the relay attack condition further includes: Before sending the first message through the second logical channel, the first card application receives a second message through the second logical channel and sends the second message through the first logical channel.

Optionally, in some embodiments of this application, the first message includes a get processing option GPO response, and the second message includes a GPO command. Alternatively, the first message includes a read read response, and the second message includes a read command.

Optionally, in some embodiments of this application, the first logical channel is a logical channel between the SE and an application processor, and the second logical channel is a logical channel between the SE and a point of sale terminal.

Optionally, in some embodiments of this application,
the processor 803 is specifically configured to: parse message headers of transfer-out data and transfer-in data of the first card application to obtain corresponding message types and logical channel numbers; and when the message type is a preset message type, record at least the logical channel numbers and behavior types of the transfer-out data and the transfer-in data of the first card application, where the behavior type is transfer-in behavior or transfer-out behavior.

Optionally, in some embodiments of this application, the preset message type includes a get processing option GPO response, a GPO command, a read read response, or a read command.

Optionally, in some embodiments of this application,
the processor 803 is specifically configured to: obtain a first select command through the first logical channel; and if the first select command includes a first card application identifier 803, determine that the first card application is selected.

Alternatively,
the processor 803 is specifically configured to: obtain a first select command through the first logical channel, and obtain a second select command through the second logical channel; and if the first select command includes a first card application identifier and the second select command includes the first card application identifier, determine that the first card application is selected.

Optionally, in some embodiments of this application,
the processor 803 is specifically configured to determine the first card application as a preset application.

Optionally, in some embodiments of this application,
the transceiver 802 is configured to: skip sending data to a point-of-sale terminal; or send empty data to a point-of-sale terminal.

Optionally, in some embodiments of this application,
the processor 803 is further configured to: lock the first card application; or lock the SE.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A relay attack processing method, wherein the method is applied to a secure element SE in a terminal, and the method comprises:
if the SE determines that a first card application is selected, monitoring (301), by the SE, data transfer-out behavior and data transfer-in behavior of the first card application, wherein the first card application is a card application stored in the SE; and
if the data transfer-out behavior and the data transfer-in behavior meet a relay attack condition, performing (302), by the SE, defense processing,
wherein the relay attack condition comprises: the first card application receives a first message through a first logical channel, and sends the first message through a second logical channel.

2. The method according to claim 1, wherein the relay attack condition further comprises: before sending the first message through the second logical channel, the first card application receives a second message through the second logical channel.

3. The method according to claim 1, wherein the relay attack condition further comprises: before sending the first message through the second logical channel, the first card application receives a second message through the second logical channel and sends the second message through the first logical channel.

4. The method according to any one of claims 1 to 3, wherein the first message comprises a get processing option GPO response, and the second message comprises a GPO command; or the first message comprises a read read response, and the second message comprises a read command.

5. The method according to any one of claims 1 to 3, wherein the first logical channel is a logical channel between the SE and an application processor, and the second logical channel is a logical channel between the SE and a point of sale terminal.

6. The method according to any one of claims 1 to 5, wherein the monitoring, by the SE, data transfer-out behavior and data transfer-in behavior of the first card application comprises:
parsing, by the SE, message headers of transfer-out data and transfer-in data of the first card application to obtain corresponding message types and logical channel numbers; and
when the message type is a preset message type, recording, by the SE, at least the logical channel numbers and behavior types of the transfer-out data and the transfer-in data of the first card application, wherein the behavior type is transfer-in behavior or transfer-out behavior.

7. The method according to claim 6, wherein the preset message type comprises a get processing option GPO response, a GPO command, a read read response, or a read command.

8. The method according to any one of claims 1 to 7, wherein that the SE determines that the first card application is selected comprises:
obtaining, by the SE, a first select command through the first logical channel; and if the first select command comprises a first card application identifier, determining, by the SE, that the first card application is selected; or
obtaining (403, 503), by the SE, a first select command through the first logical channel, and obtaining (401, 501) a second select command through the second logical channel; and if the first select command comprises a first card application identifier and the second select command comprises the first card application identifier, determining (405, 505), by the SE, that the first card application is selected.

9. The method according to claim 8, wherein the method further comprises:
determining, by the SE, the first card application as a preset application.

10. The method according to any one of claims 1 to 9, wherein the performing, by the secure element, defense processing comprises:
skipping sending, by the SE, data to the point of sale terminal; or
sending, by the SE, empty data to the point of sale terminal.

11. The method according to any one of claims 1 to 10, wherein the method further comprises:
locking, by the SE, the first card application; or
locking the SE.

12. A secure element SE, comprising instructions, wherein when the instructions are run on a terminal, the terminal is enabled to perform the method according to any one of claims 1 to 11.

## Patentansprüche

1. Verfahren zum Bearbeiten von Relais-Angriffen, wobei das Verfahren auf ein sicheres Element SE in einem Endgerät angewandt wird, und wobei das Verfahren Folgendes umfasst:
wenn das SE ermittelt, dass eine erste Kartenanwendung ausgewählt wird, Überwachen (301), durch das SE, eines Verhaltens einer ausgehenden Datenübertragung und eines Verhaltens einer eingehenden Datenübertragung der ersten Kartenanwendung, wobei die erste Kartenanwendung eine Kartenanwendung ist, die in dem SE gespeichert ist, und
wenn das Verhalten einer ausgehenden Datenübertragung und das Verhalten einer eingehenden Datenübertragung eine Relais-Angriffsbedingung erfüllen, Durchführen (302) einer Abwehrbearbeitung durch das SE,
wobei die Relais-Angriffsbedingung umfasst: dass die erste Kartenanwendung eine erste Nachricht durch einen ersten Logikkanal empfängt und die erste Nachricht durch einen zweiten Logikkanal sendet.

2. Verfahren nach Anspruch 1, wobei die Relais-Angriffsbedingung ferner umfasst: dass die erste Kartenanwendung, vor dem Senden der ersten Nachricht durch den zweiten Logikkanal, eine zweite Nachricht durch den zweiten Logikkanal empfängt.

3. Verfahren nach Anspruch 1, wobei die Relais-Angriffsbedingung ferner umfasst: dass die erste Kartenanwendung, vor dem Senden der ersten Nachricht durch den zweiten Logikkanal, eine zweite Nachricht durch den zweiten Logikkanal empfängt und die zweite Nachricht durch den ersten Logikkanal sendet.

4. Verfahren nach einem der Ansprüche 1 bis 3, wobei die erste Nachricht eine Antwort eines Erhaltens einer Bearbeitungsoption, GPO-Antwort, umfasst, und die zweite Nachricht einen GPO-Befehl umfasst; oder wobei die erste Nachricht eine gelesene Leseantwort umfasst und die zweite Nachricht einen Lesebefehl umfasst.

5. Verfahren nach einem der Ansprüche 1 bis 3, wobei der erste Logikkanal ein Logikkanal zwischen dem SE und einem Anwendungsprozessor ist und der zweite Logikkanal ein Logikkanal zwischen dem SE und einem Verkaufsstellenendgerät ist.

6. Verfahren nach einem der Ansprüche 1 bis 5, wobei das Überwachen, durch das SE, eines Verhaltens einer ausgehenden Datenübertragung und eines Verhaltens einer eingehenden Datenübertragung der ersten Kartenanwendung Folgendes umfasst:
Analysieren, durch das SE, von Nachrichtenkopfzeilen der ausgehenden Datenübertragung und der eingehenden Datenübertragung der ersten Kartenanwendung, um entsprechende Nachrichtentypen und Logikkanalnummern zu erhalten; und
wenn der Nachrichtentyp ein voreingestellter Nachrichtentyp ist, Aufzeichnen, durch das SE, mindestens der Logikkanalnummern und der Verhaltenstypen der ausgehenden Datenübertragung und der eingehenden Datenübertragung der ersten Kartenanwendung, wobei der Verhaltenstyp ein Verhalten einer eingehenden Übertragung oder ein Verhalten einer ausgehenden Übertragung ist.

7. Verfahren nach Anspruch 6, wobei der voreingestellte Nachrichtentyp eine Antwort eines Erhaltens einer Bearbeitungsoption, GPO-Antwort, eine gelesene Leseantwort oder einen Lesebefehl umfasst.

8. Verfahren nach einem der Ansprüche 1 bis 7, wobei das Ermitteln, durch das SE, dass die erste Kartenanwendung ausgewählt wird, Folgendes umfasst:
Erhalten, in dem SE, eines ersten ausgewählten Befehls durch den ersten Logikkanal; und wenn der erste ausgewählte Befehl eine erste Kartenanwendungskennung umfasst, Ermitteln, durch das SE, dass die erste Kartenanwendung ausgewählt wurde; oder
Erhalten (403, 503), in dem SE, eines ersten ausgewählten Befehls durch den ersten Logikkanal; und Erhalten (401, 501) eines zweiten ausgewählten Befehls durch den zweiten Logikkanal; und wenn der erste ausgewählte Befehl eine erste Kartenanwendungskennung umfasst und der zweite ausgewählte Befehl die erste Kartenanwendungskennung umfasst, Ermitteln (405, 505), durch das SE, dass die erste Kartenanwendung ausgewählt wurde.

9. Verfahren nach Anspruch 8, wobei das Verfahren außerdem Folgendes umfasst:
Ermitteln, durch das SE, der ersten Kartenanwendung als eine voreingestellte Anwendung.

10. Verfahren nach einem der Ansprüche 1 bis 9, wobei das Ausführen einer Abwehrbearbeitung durch das sichere Element Folgendes umfasst:
Überspringen eines Sendens von Daten von dem SE zu dem Verkaufsstellenendgerät; oder
Senden von leeren Daten von dem SE zu dem Verkaufsstellenendgerät.

11. Verfahren nach einem der Ansprüche 1 bis 10, wobei das Verfahren außerdem Folgendes umfasst:
Sperren, durch das SE, der ersten Kartenanwendung; oder
Sperren der SE.

12. Sicheres Element, SE, das Anweisungen umfasst, wobei, wenn die Anweisungen in einem Endgerät ausgeführt werden, das Endgerät aktiviert wird, um das Verfahren nach einem der Ansprüche 1 bis 11 durchzuführen.

## Revendications

1. Procédé de traitement d'attaque de relais, dans lequel le procédé est appliqué à un élément sécurisé SE dans un terminal, et le procédé comprend :
si le SE détermine qu'une première application de carte est sélectionnée, la surveillance (301), par le SE, d'un comportement de transfert sortant de données et d'un comportement de transfert entrant de données de la première application de carte, dans lequel la première application de carte est une application de carte stockée dans le SE ; et
si le comportement de transfert sortant de données et le comportement de transfert entrant de données respectent une condition d'attaque de relais, la réalisation (302), par le SE, d'un traitement de défense,
dans lequel la condition d'attaque de relais comprend : la première application de carte reçoit un premier message par l'intermédiaire d'un premier canal logique, et envoie le premier message par l'intermédiaire d'un second canal logique.

2. Procédé selon la revendication 1, dans lequel la condition d'attaque de relais comprend en outre : avant d'envoyer le premier message par l'intermédiaire du second canal logique, la première application de carte reçoit un second message par l'intermédiaire du second canal logique.

3. Procédé selon la revendication 1, dans lequel la condition d'attaque de relais comprend en outre : avant d'envoyer le premier message par l'intermédiaire du second canal logique, la première application de carte reçoit un second message par l'intermédiaire du second canal logique et envoie le second message par l'intermédiaire du premier canal logique.

4. Procédé selon l'une quelconque des revendications 1 à 3, dans lequel le premier message comprend une réponse d'obtention d'option de traitement GPO, et le second message comprend une commande de GPO ; ou le premier message comprend une réponse de lecture lue, et le second message comprend une commande de lecture.

5. Procédé selon l'une quelconque des revendications 1 à 3, dans lequel le premier canal logique est un canal logique entre le SE et un processeur d'application, et le second canal logique est un canal logique entre le SE et un terminal de point de vente.

6. Procédé selon l'une quelconque des revendications 1 à 5, dans lequel la surveillance, par le SE, d'un comportement de transfert sortant de données et d'un comportement de transfert entrant de données de la première application de carte comprend :
l'analyse, par le SE, d'en-têtes de message de données de transfert sortant et de données de transfert entrant de la première application de carte pour obtenir des types de message et numéros de canal logique correspondants ; et
lorsque le type de message est un type de message prédéfini, l'enregistrement, par le SE, au moins des numéros de canal logique et types de comportement des données de transfert sortant et des données de transfert entrant de la première application de carte, dans lequel le type de comportement est un comportement de transfert entrant ou un comportement de transfert sortant.

7. Procédé selon la revendication 6, dans lequel le type de message prédéfini comprend une réponse d'obtention d'option de traitement GPO, une commande de GPO, une réponse de lecture lue, ou une commande de lecture.

8. Procédé selon l'une quelconque des revendications 1 à 7, dans lequel le fait que le SE détermine que la première application de carte est sélectionnée comprend :
l'obtention, par le SE, d'une première commande de sélection par l'intermédiaire du premier canal logique ; et, si la première commande de sélection comprend un identifiant de première application de carte, la détermination, par le SE, que la première application de carte est sélectionnée ; ou
l'obtention (403, 503), par le SE, d'une première commande de sélection par l'intermédiaire du premier canal logique, et l'obtention (401, 501) d'une seconde commande de sélection par l'intermédiaire du second canal logique ; et, si la première commande de sélection comprend un identifiant de première application de carte et la seconde commande de sélection comprend l'identifiant de première application de carte, la détermination (405, 505), par le SE, que la première application de carte est sélectionnée.

9. Procédé selon la revendication 8, dans lequel le procédé comprend en outre :
la détermination, par le SE, de la première application de carte en tant qu'application prédéfinie.

10. Procédé selon l'une quelconque des revendications 1 à 9, dans lequel la réalisation, par l'élément sécurisé, d'un traitement de défense comprend :
la non-réalisation de l'envoi, par le SE, de données au terminal de point de vente ; ou
l'envoi, par le SE, de données vides au terminal de point de vente.

11. Procédé selon l'une quelconque des revendications 1 à 10, dans lequel le procédé comprend en outre :
le verrouillage, par le SE, de la première application de carte ; ou
le verrouillage du SE.

12. Élément sécurisé SE, comprenant des instructions, dans lequel, lorsque les instructions sont exécutées sur un terminal, le terminal est permis de réaliser le procédé selon l'une quelconque des revendications 1 à 11.
